# NEW EUROPEAN PATENT SPECIFICATION

(11) **EP 3 206 008 B2**
(45) Date of publication and mention of the opposition decision: **09.08.2023**
(45) Mention of the grant of the patent: 23.09.2020
(21) Application number: 16155078.5
(22) Date of filing: 10.02.2016
(51) Int. Cl.: G01M 17/007

(54) **AN AUTOMOTIVE TESTING SYSTEM, METHOD AND COMPUTER PROGRAM PRODUCT**
AUTOMOBILPRÜFSYSTEM, VERFAHREN UND COMPUTERPROGRAMMPRODUKT
SYSTÈME DE TEST D'AUTOMOBILES, PROCÉDÉ ET PRODUIT DE PROGRAMME INFORMATIQUE

(43) Date of publication of application: 16.08.2017
(73) Proprietor: Siemens Industry Software NV, 3001 Leuven (BE)
(72) Inventor: TIDEMAN, Martijn, 2289 CC Rijswijk (NL); WANTENAAR Martinus Fransiscus Hendricus, 2289 CC Rijswijk (NL)
(74) Representative: Siemens Patent Attorneys

(56) References cited:
- JP-A- H11 260 685
- KR-B1- 100 709 401
- US-A- 5 986 545

## Description

The invention relates to an automotive testing system, for testing camera-based functionalities, the camera-based functionalities being:
- variable cruise control,
- collision avoidance systems and
- pedestrian detection,
comprising a data processing unit provided with a data input port for receiving sensor input data and a data output port for transmitting processed data, further comprising a data acquisition unit forwarding sensor input data to said data processing unit, the data acquisition unit including a sensor unit having a sensor system and an electronic system for capturing sensor data.

Automotive testing systems are known for the purpose of testing data acquisition units and data processing units processing sensor input data generated by said data acquisition units, thereby reducing expensive testing equipment and testing time in realistic traffic circumstances. Data acquisition units can be provided with a camera unit having an optic system and an electronic system for capturing image data.

When testing camera units, e.g. used for dedicated automotive functionality such as variable cruise control, collision avoiding systems, pedestrian detection etc, an optic image is generated on a display to be captured by the camera unit. On the display, various traffic situations including road traffic and weather circumstances are shown to test the functionality of the camera unit and the data processing unit processing the image data captured by the camera unit.

It is an object of the invention to provide an automotive testing system according to the preamble that enables testing even more realistic circumstances. Thereto, according to the invention, the automotive testing system further comprises a synthetic sensor data generator transmitting synthetic sensor data to the electronic system of the sensor unit, the sensor being a camera, wherein the sensor unit is a camera unit, wherein the sensor system is an optic system, and wherein the sensor data are image data.

By using a synthetic sensor data generator instead of a display, the optic system of the camera unit is functionally simulated so that testing data can be represented more realistically to the electronic system of the camera unit. On the one hand, side effects introduced in the optical path of the testing system can be avoided, while, on the other hand, real life optic phenomena that are not visible on a display might now be included in the synthetic sensor data mimicking the optical steps performed in the camera unit.

The document US 5,986,545 - Sanada et al. "Vehicle driveability evaluation system" discloses a system for generating driveability signal for a setup in which a real car engine is embedded in a driving simulator. Sensor data of the engine is processed with simulation of external conditions and vehicle dynamics. The output is used to control an artificial load (dynamic dynamometer) for the engine and for synthesizing images and physical feedback such as acceleration for the driver.

The document KR-100709401B discloses a hardware in the loop simulation apparatus and a test method thereof for lane departure warning systems, whereby images are displayed on a screen.

The invention is at least partly based on the insight that a display inherently is limited in representing realistic optic circumstances thereby also limiting the performance and/or reliability of the automotive testing system. Further, display features are subjected to bias so that test results of the system are vulnerable to reproducibility issues. According to an aspect of the invention, such disadvantageous effects are circumvented by generating synthetic sensor data replacing the real image data as well as by transmitting these synthetic sensor data to the electronic system of the sensor unit rather than projecting these to the sensor unit via a display.

It is noted that, within the context of the application, the expression "synthetic sensor data" is to be understood as data that has been generated electronically by simulating data that is normally generated by the respective sensor system.

The invention also relates to a method according to claim 7.

Further, the invention relates to a computer program product according to claim 13. A computer program product may comprise a set of computer executable instructions stored on a data carrier, such as a flash memory, a CD or a DVD. The set of computer executable instructions, which allow a programmable computer to carry out the method as defined above, may also be available for downloading from a remote server, for example via the Internet, e.g. as an app.

Other advantageous options and embodiments according to the invention are described in the following claims.

By way of example only, embodiments of the present invention will now be described with reference to the accompanying figures in which
Fig. 1 shows a schematic view of an automotive testing system according to the invention;
Fig. 2 shows a flow chart of a first embodiment of a method according to the invention, and
Fig. 3 shows a flow chart of a second embodiment of a method according to the invention.

The figures merely illustrate preferred embodiments according to the invention. In the figures, the same reference numbers refer to equal or corresponding parts.

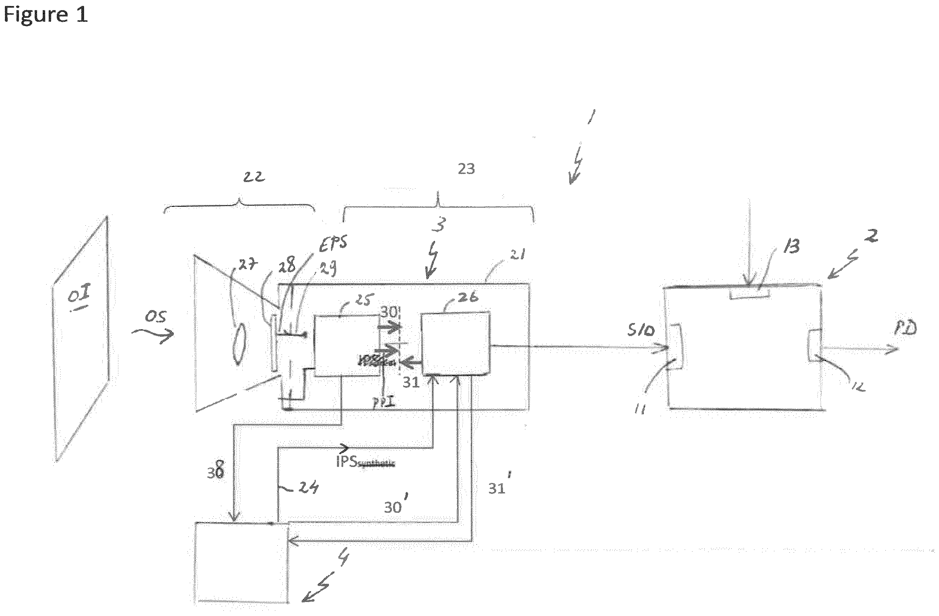

Figure 1 shows a schematic view of an automotive testing system 1 according to the invention. The system comprises a data processing unit 2, a data acquisition unit 3 and a synthetic sensor data generator 4.

The data processing unit 2 is provided with a data input port 11 for receiving sensor input data and a data output port 12 for transmitting processed data PD, e.g. for the purpose of feeding a control unit for generating control data based on the processed data transmitted by the processing unit 2. In the shown embodiment, the processing unit 2 further comprises an additional data input port 13, e.g. for receiving further input data, e.g. radar data.

The data acquisition unit 3 is arranged for forwarding sensor input data to said data processing unit 2, via the data input port 11 of the data processing unit 2. The data acquisition unit 3 includes a sensor unit 21 having a sensor system 22 and an electronic system 23 for capturing sensor data. In the shown embodiment, the sensor unit 21 is implemented as a camera unit, wherein the sensor system 22 is an optic system and wherein the sensor data are image data.

Further, the synthetic sensor data generator 4 of the automotive testing system 1 is arranged for generating and transmitting synthetic sensor data also referred to as electronic image pixel signals IPS to the electronic system 23 of the camera unit 21. In the shown embodiment, the image simulating generator 4 is connected to the electronic system 23 of the camera unit 21 via a wired transmission channel 24. In principle, the image pixel signals IPS can be transmitted in another way, e.g. via a wireless transmission channel.

In the shown embodiment, the electronic system 23 of the camera unit 21 includes two modules, e.g. a pre-processing module 25 and a digital signal processing unit DSP 26 arranged in series such that the pre-processing module 25 processes raw image data converting them into pre-processed image data PPI while the digital signal processing unit DSP 26 performs further processing on the pre-processed data PPI and then transmits the processed data as sensor input data SID to the data input port 11 of the data processing unit 2. As an example, the pre-processing module 25 might be arranged for removing noise from image data while the digital signal processing unit may be arranged for identifying object information from the image data. Further, the pre-processing module 25 transmits status information 30 of the pre-processing module 25 and the optic system 22 towards the digital signal processing unit DSP 26, as metadata.

The optic system 22 of the camera unit 21 typically includes a lens configuration 27 and an image optic sensor 28. Further, the optic system 22 may include other components as well such as a shutter. The image optic sensor 28 can be implemented as a CCD or CMOS sensor converting an optic signals OS received from an optic image OI into electronic pixel signals EPS representing the optic image OI as electronic signals. The image optic sensor 28 may at least partially be integrated with the pre-processing module 25.

In known camera units 21, the image optic sensor 28 is connected to the electronic system 23 via a sensor data channel 29 to transmit the electronic pixel signals EPS converted from the optic signals OS towards the electronic system 23 for processing. Then, an optic image OI is captured by converting optic signals OS into electronic pixel signals EPS and processing said electronic pixel signals EPS by the electronic system 23. In known camera units 21, the pre-processing module 25 transmits pre-processed data PPI and status information 30 towards the digital signal processing unit DSP 26. Then, the digital signal processing unit DSP 26 forwards sensor input data SID to the data input port 11 data processing unit 2 and image enhancements requests and/or commands 31 back to the pre-processing module 25.

During operation of a known automotive testing system, an image generator is provided generating an optic image OI on a display arranged before the camera unit 21. The image generator typically generates a sequence of images forming a video showing realistic traffic situations to simulate common real life traffic circumstances for testing the performance of the camera unit 21 and further systems such as the data processing unit 2 of the automotive testing system 1.

According to an aspect of the invention, the electronic system 23 of the camera unit 21 receives synthetic sensor data also referred to as electronic image pixel signals IPS generated by the synthetic sensor data generator 4 of the automotive testing system 1, thus simulating image data that usually is captured by the camera system using the optic system 22. The electronic pixel signals EPS provided by the image optic sensor 28 no longer forms a basis for the sensor input data SID that is transmitted from the digital signal processor DSP 26 to the data input port 11 of the data processing unit 2. In the shown embodiment, the pre-processing module 25 transmits neither pre-processed data PPI nor status information 30 towards the digital signal processing unit DSP 26. Said transmission can be stopped e.g. by physically disconnecting respective transmission channels or by functionally terminating said transmission actions, using software. Further, the transmission of pre-processed data PPI and/or status information 30 towards the digital signal processing unit DSP 26 can also be disabled in another way e.g. by deactivating the image optic sensor 28 and/or by removing disabling the sensor data channel 29.

Then, an optic image is captured by generating synthetic image sensor data or electronic image pixel signals IPS simulating in the electronic domain the functionality of the optic system 22 of the camera unit 21 including propagation of the optic signal OS through the lens system 27 and conversion into electronic pixel signals EPS using the image optic sensor 28. Then, image data captured by the camera unit 21 are based on the electronic image pixel or data signals transmitted to the electronic system 23 of the camera unit 21.

By bypassing the optic system 22 of the camera unit 21 the optic part of the testing environment is effectively simulated thus removing artefacts that might be introduced in said optic part during testing but are not present in real life circumstances. As an example, artefacts might be generated when generating the optic image OI using RGB light generating elements. On the other hand, real life optic phenomena that are not visible in the generated optic image OI, such as infrared interaction, might now be included in the image pixel signals IPS mimicking the optical steps performed in the camera unit 21.

When applying an automotive testing system 1 according to the invention, a step of generating the optic image OI has become superfluous.

In a particular embodiment, the image optic sensor 28 may even be removed from the camera unit 21. However, other functionality of the camera unit 21 remains in operation, e.g. including controlling operations of the lens system and/or shutter operation. In the shown embodiment, status information of the pre-processing module 25 and/or optic system 22 e.g. regarding the lens system 27 and other optic components is forwarded to the synthetic sensor data generator 4, as status information 38, so that the image pixel signals IPS may take into account optic propagation behaviour of the simulated optic signal OS in the optic system 22 and other processing effects in the pre-processing module 25.

The synthetic sensor data or electronic image pixel signals IPS might represent pixel data that has already been processed in a pre-processing module 25 of the electronic system 23. Then, the image pixel signals IPS is transmitted to the digital signal processing unit DSP 26 of the camera unit 21. In the shown embodiment, the data transmission channel 24 interconnects the synthetic sensor data generator 4 and the digital signal processing unit DSP 26 so that the image pixel signals IPS is transmitted to said digital signal processing unit DSP 26. Then, the usual electronic interaction between the pre-processing module 25 and the digital signal processing unit DSP 26 is interrupted. There is no transmission of pre-processed data PPI and status information 30 towards the digital signal processing unit DSP 26 anymore, and no transmission of image enhancements requests and/or commands 31 from the digital signal processing unit DSP 26 back to the pre-processing module 25. Then, the digital signal processing unit DSP 26 receives image pixel signals IPS and synthetic status information 30' of the pre-processing module 25, both from the synthetic sensor data generator 4. Both the image data and status data usually transmitted by the pre-processing module 25 is now simulated by the synthetic sensor data generator 4. Also, the digital signal processing unit DSP 26 now transmits the image enhancements requests and/or commands 31' to the synthetic sensor data generator 4, so that said generator 4 may include such information when generating the synthetic image and status data.

It is noted that, alternatively, the image pixel signals IPS might be transmitted to the electronic system 23 in another format, e.g. as raw pixel data that is usually generated by the image optic sensor 28. Then, the image pixel signals IPS may be transmitted to the pre-processing module 25 or to another module of the electronic system 23 of the camera unit 21.

It is noted that not only image sensor data can be simulated using synthetic sensor data. In other embodiments according to the invention, the sensor unit is implemented as a unit receiving other sensor signals such as laser signals, infrared signals, radar signals, acoustic signals, ultrasonic signals, pressure signals or electronic signals received in a wired or wireless way and representing any type of measured physical signals associated with automotive conditions or parameters. The signals may relate to automotive conditions or parameters of a vehicle in which the sensor unit is mounted or automotive conditions or parameters of other vehicles forwarding such signals to the sensor unit. It is further noted that the automotive testing system may include a multiple number of acquisition units wherein sensor data is simulated using synthetic sensor data. By providing synthetic sensor data to the electronic system of the respective sensor unit, a process of generating sensor data in the sensor unit can be simulated in the electronic domain in a manner that is more realistic than simulating the parameter to be sensed in the parameter domain, i.e. in the visual, electromagnetic, acoustic, ultra-acoustic or other physical domain.

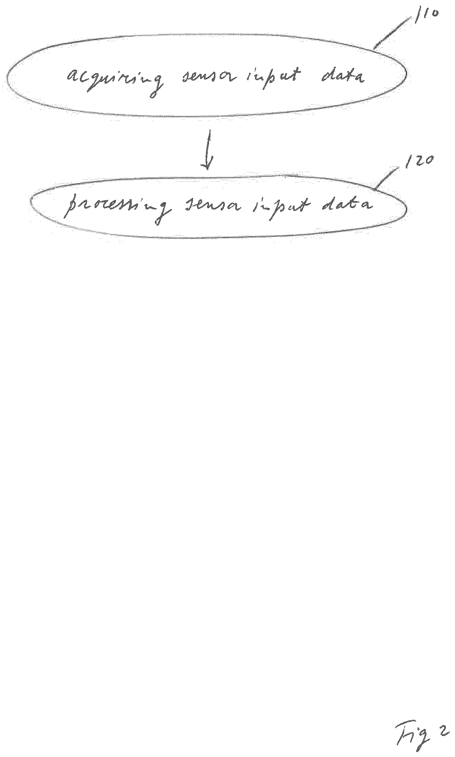

Figure 2 shows a flow chart of an embodiment of a method according to the invention. The method is used for automotive testing, and comprises a step of acquiring 110 sensor input data, and a step of processing 120 said sensor input data, wherein the step of acquiring 110 sensor input data includes capturing sensor data using a sensor unit having a sensor system and an electronic system, and wherein the step of acquiring 110 sensor input data further includes transmitting synthetic sensor data from a synthetic sensor data generator to the electronic system of the sensor unit.

The method of automotive testing can be facilitated using dedicated hardware structures, such as computer servers. Otherwise, the method can also at least partially be performed using a computer program product comprising instructions for causing a processor of a computer system to facilitate automotive testing. All (sub)steps can in principle be performed on a single processor. However, it is noted that at least one step can be performed on a separate processor. A processor can be loaded with a specific software module. Dedicated software modules can be provided, e.g. from the Internet.

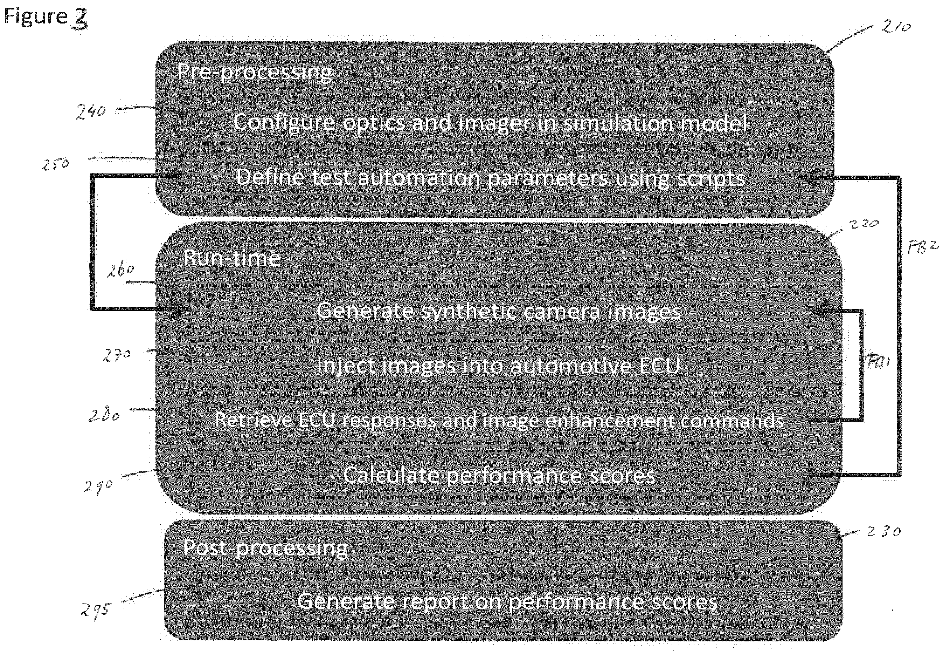

Fig. 3 shows a flow chart of a second embodiment of a method according to the invention. Here, the method includes three modules, e.g. a pre-processing module 210, a run-time module 220 and a post-processing module 230. The pre-processing module 210 includes a step of configuring 240 optics and imager in a simulation model to create a simulation environment. Further, the pre-processing module 210 includes a step of defining 250 test automation parameters using scrips in order to define test cases for testing the data acquisition unit. The run-time module 220 includes four steps, viz. a step of generating 260 synthetic camera images using the synthetic sensor data generator, a step of injecting 270 images into an automotive ECU, e.g. by transmitting the synthetic sensor data to the digital signal processing unit DSP being a unit of the electronic system of the sensor unit, a step of retrieving 280 ECU response and image enhancement commands, e.g. by receiving image enhancements requests and/or commands transmitted from the digital signal processing unit DSP from the sensor unit to the synthetic sensor data generator, and a step of calculating 290 performance scores, e.g. by evaluating processed data PD that is output by the data processing unit 2. Further, the post-processing module 230 includes a step of generating 295 a report on performance scores obtained from the calculated performance scores.

The run-time module 220 includes a first feedback loop FB1 so that a sequence of the generating step 260, the injecting step 270 and the retrieving step 280 is repeatedly performed simulating the test cases defined in the defining step 250 of the pre-processing module 210. Further, a second feedback loop FB2 is provided such the defining step 250 is repeated after calculating 290 the performance scores to facilitate additional testing experiments based on test results. It is noted that various alternative embodiments can be implemented, e.g. by including further feedback loops and/or by integrating test results of other test equipment.

The invention is not restricted to the embodiments described herein. It will be understood that many variants are possible.

It is noted that the electronic system 23 of the sensor unit 21 may include more or less units for processing sensor data. As an example, the sensor unit 21 may be implemented without a digital signal processing unit DSP 26 or with an additional processing unit for processing intermediate sensor data.

## Claims

1. An automotive testing system (1) for testing camera-based functionalities, the camera-based functionalities being:
- variable cruise control,
- collision avoidance systems and
- pedestrian detection,
comprising a data processing unit (2) provided with a data input port (11) for receiving sensor input data and a data output port (12) for transmitting processed data, further comprising a data acquisition unit forwarding sensor input data to said data processing unit, the data acquisition unit (3) including a sensor unit (21) having a sensor system (22) and an electronic system for capturing sensor data, **characterized in that** the automotive testing system further comprises a synthetic sensor data generator (4) transmitting synthetic sensor data to the electronic system of the sensor unit,
the sensor being a camera,
wherein the sensor unit is a camera unit, wherein the sensor system is an optic system, and wherein the sensor data are image data.

2. An automotive testing system according to claim 1, further comprising a data transmission channel (24) interconnecting the synthetic sensor data generator and the electronic system of the sensor unit.

3. An automotive testing system according to claim 1 or 2,
wherein the sensor input data forwarded by the sensor unit are based on the synthetic sensor data transmitted to the electronic system of the sensor unit.

4. An automotive testing system according to any of the preceding claims 2 or 3,
wherein the electronic system of the sensor unit comprises a digital signal processing unit (26) and wherein the data transmission channel is arranged for transmitting the synthetic sensor data to the digital signal processing unit.

5. An automotive testing system according to any of the preceding claims,
wherein the electronic system of the sensor unit comprises a pre-processing unit (25) for pre-processing raw sensor data generated by the sensor system.

6. An automotive testing system according to any of the preceding claims,
further comprising a control unit for generating control data based on the processed data transmitted by the processing unit.

7. An automotive testing method for testing camera-based functionalities, the camera-based functionalities being:
- variable cruise control,
- collision avoidance systems and
- pedestrian detection,
comprising the steps of:
- acquiring sensor input data, and
- processing said sensor input data,
wherein the step of acquiring sensor input data includes capturing sensor data using a sensor unit having a sensor system and an electronic system, and wherein the step of acquiring sensor input data is **characterized by**
transmitting synthetic sensor data from a synthetic sensor data generator to the electronic system of the sensor unit,
the sensor being a camera,
wherein the sensor unit is a camera unit, wherein the sensor system is an optic system, and wherein the sensor data are image data.

8. An automotive testing method according to claim 7,
comprising the step of generating the synthetic sensor data to be transmitted to the electronic system of the sensor unit.

9. An automotive testing method according to claim 7 or 8,
wherein the step of transmitting synthetic sensor data to the electronic system of the sensor unit includes bypassing the sensor system of the sensor unit.

10. An automotive testing method according to claim 7, 8 or 9, further comprising a step of transmitting sensor enhancements requests and/or sensor enhancements commands to the synthetic sensor data generator.

11. An automotive testing method according to claim 10,
wherein sensor enhancements requests and/or sensor enhancements commands are included for generating synthetic sensor data.

12. An automotive testing method according to any of the preceding claims 7-11,
further comprising the step of deactivating a sensor system of the camera unit.

13. A computer program product for automotive testing of camera-based functionalities, the camera-based functionalities being:
- variable cruise control,
- collision avoidance systems and
- pedestrian detection,
the computer program product comprising computer readable code for causing a processor to perform the steps of:
- acquiring sensor input data, and
- processing said sensor input data,
wherein the step of acquiring sensor input data includes capturing sensor data using a sensor unit having a sensor system and an electronic system, and wherein the step of acquiring sensor input data is **characterized by** transmitting synthetic sensor data from a synthetic sensor data generator to the electronic system of the sensor unit,
the sensor being a camera,
wherein the sensor unit is a camera unit, wherein the sensor system is an optic system, and wherein the sensor data are image data.

## Patentansprüche

1. Automobilprüfsystem (1) zum Prüfen von kameragestützten Funktionen, wobei die kameragestützten Funktionen sind:
- eine variable Geschwindigkeitsregelung,
- Kollisionsvermeidungssysteme und
- eine Fußgängerdetektion,
umfassend eine Datenverarbeitungseinheit (2), die mit einem Dateneingangsanschluss (11) zum Empfangen von Sensoreingangsdaten und einem Datenausgangsanschluss (12) zum Übertragen verarbeiteter Daten versehen ist, ferner umfassend eine Datenerhebungseinheit, die Sensoreingangsdaten an die Datenverarbeitungseinheit weiterleitet, wobei die Datenerhebungseinheit (3) eine Sensoreinheit (21) mit einem Sensorsystem (22) und einem elektronischen System zum Erfassen von Sensordaten umfasst,
**dadurch gekennzeichnet, dass** das Automobilprüfsystem ferner einen synthetischen Sensordatengenerator (4) umfasst, der synthetische Sensordaten an das elektronische System der Sensoreinheit überträgt,
wobei der Sensor eine Kamera ist,
wobei die Sensoreinheit eine Kameraeinheit ist, wobei das Sensorsystem ein optisches System ist und wobei die Sensordaten Bilddaten sind.

2. Automobilprüfsystem nach Anspruch 1, ferner umfassend einen Datenübertragungskanal (24), der den synthetischen Sensordatengenerator und das elektronische System der Sensoreinheit miteinander verbindet.

3. Automobilprüfsystem nach Anspruch 1 oder 2,
wobei die von der Sensoreinheit weitergeleiteten Sensoreingangsdaten auf den an das elektronische System der Sensoreinheit übertragenen synthetischen Sensordaten basieren.

4. Automobilprüfsystem nach einem der vorhergehenden Ansprüche 2 oder 3,
wobei das elektronische System der Sensoreinheit eine digitale Signalverarbeitungseinheit (26) umfasst und wobei der Datenübertragungskanal zum Übertragen der synthetischen Sensordaten an die digitale Signalverarbeitungseinheit angeordnet ist.

5. Automobilprüfsystem nach einem der vorhergehenden Ansprüche,
wobei das elektronische System der Sensoreinheit eine Vorverarbeitungseinheit (25) zum Vorverarbeiten von durch das Sensorsystem generierten Sensorrohdaten umfasst.

6. Automobilprüfsystem nach einem der vorhergehenden Ansprüche,
ferner umfassend eine Steuereinheit zum Generieren von Steuerdaten basierend auf den durch die Verarbeitungseinheit übertragenen verarbeiteten Daten.

7. Automobilprüfverfahren zum Prüfen von kameragestützten Funktionen, wobei die kameragestützten Funktionen sind:
- eine variable Geschwindigkeitsregelung,
- Kollisionsvermeidungssysteme und
- eine Fußgängerdetektion,
umfassend die folgenden Schritte:
- Erheben von Sensoreingangsdaten, und
- Verarbeiten der Sensoreingangsdaten,
wobei der Schritt des Erhebens von Sensoreingangsdaten Erfassen von Sensordaten mithilfe einer Sensoreinheit mit einem Sensorsystem und einem elektronischen System umfasst, und wobei der Schritt des Erhebens von Sensoreingangsdaten **gekennzeichnet ist durch**
Übertragen von synthetischen Sensordaten von einem synthetischen Sensordatengenerator an das elektronische System der Sensoreinheit,
wobei der Sensor eine Kamera ist,
wobei die Sensoreinheit eine Kameraeinheit ist, wobei das Sensorsystem ein optisches System ist und wobei die Sensordaten Bilddaten sind.

8. Automobilprüfverfahren nach Anspruch 7,
umfassend den Schritt Generieren der an das elektronische System der Sensoreinheit zu übertragenden synthetischen Sensordaten.

9. Automobilprüfverfahren nach Anspruch 7 oder 8,
wobei der Schritt des Übertragens von synthetischen Sensordaten an das elektronische System der Sensoreinheit Umgehen des Sensorsystems der Sensoreinheit umfasst.

10. Automobilprüfverfahren nach Anspruch 7, 8 oder 9,
ferner umfassend einen Schritt Übertragen von Sensorverstärkungsanforderungen und/oder Sensorverstärkungsbefehlen an den synthetischen Sensordatengenerator.

11. Automobilprüfverfahren nach Anspruch 10,
wobei Sensorverstärkungsanforderungen und/oder Sensorverstärkungsbefehle zum Generieren synthetischer Sensordaten beinhaltet sind.

12. Automobilprüfverfahren nach einem der vorhergehenden Ansprüche 7-11,
ferner umfassend den Schritt Deaktivieren eines Sensorsystems der Kameraeinheit.

13. Computerprogrammprodukt für eine Automobilprüfung von kameragestützten Funktionen, wobei die kameragestützten Funktionen sind:
- eine variable Geschwindigkeitsregelung,
- Kollisionsvermeidungssysteme und
- eine Fußgängerdetektion,
wobei das Computerprogrammprodukt computerlesbaren Code umfasst, um einen Prozessor zu veranlassen, die folgenden Schritte durchzuführen:
- Erheben von Sensoreingangsdaten, und
- Verarbeiten der Sensoreingangsdaten,
wobei der Schritt des Erhebens von Sensoreingangsdaten Erfassen von Sensordaten mithilfe einer Sensoreinheit mit einem Sensorsystem und einem elektronischen System umfasst, und wobei der Schritt des Erhebens von Sensoreingangsdaten **gekennzeichnet ist durch** Übertragen von synthetischen Sensordaten von einem synthetischen Sensordatengenerator an das elektronische System der Sensoreinheit,
wobei der Sensor eine Kamera ist,
wobei die Sensoreinheit eine Kameraeinheit ist, wobei das Sensorsystem ein optisches System ist und wobei die Sensordaten Bilddaten sind.

## Revendications

1. Système ( 1 ) de test d'automobile pour tester des fonctionnalités sur la base de caméra, les fonctionnalités sur la base de caméra étant :
- une régulation de vitesse variable,
- des systèmes prévenant une collision et
- une détection de passant,
comprenant une unité ( 2 ) de traitement de données pourvue d'un accès ( 11 ) d'entrée de données pour recevoir des données d'entrée de capteur et un accès ( 12 ) de sortie de données pour transmettre des données traitées, comprenant, en outre, une unité d'acquisition de données acheminant des données d'entrée de capteur à l'unité de traitement de données, l'unité ( 3 ) d'acquisition de données ayant une unité ( 21 ) de capteur, ayant un système ( 22 ) de capteur et un système électronique pour prendre des données de capteur, **caractérisé en ce que**
le système de test d'automobile comprend, en outre, un générateur ( 4 ) de données de capteur synthétiques transmettant des données de capteur synthétiques au système électronique de l'unité de capteur, le capteur étant une caméra,
dans lequel l'unité de capteur est une unité de caméra, dans lequel le système de capteur est un système optique, et dans lequel les données de capteur sont des données d'image.

2. Système de test d'automobile suivant la revendication 1, comprenant, en outre, un canal ( 24 ) de transmission de données interconnectant le générateur de données de capteur synthétiques et le système électronique de l'unité de capteur.

3. Système de test d'automobile suivant la revendication 1 ou 2,
dans lequel les données d'entrée de capteur acheminées par l'unité de capteur reposent sur les données de capteur synthétiques transmises au système électronique de l'unité de capteur.

4. Système de test d'automobile suivant l'une quelconque des revendications 2 ou 3 précédentes,
dans lequel le système électronique de l'unité de capteur comprend une unité ( 26 ) de traitement de signaux numériques, et dans lequel le canal de transmission de données est agencé pour transmettre les données de capteur synthétiques à l'unité de traitement de signaux numériques.

5. Système de test d'automobile suivant l'une quelconque des revendications précédentes,
dans lequel le système électronique de l'unité de capteur comprend une unité ( 25 ) de prétraitement pour prétraiter des données de capteur brutes produites par le système de capteur.

6. Système de test d'automobile suivant l'une quelconque des revendications précédentes,
comprenant, en outre, une unité de commande pour produire des données de commande reposant sur des données traitées transmises par l'unité de traitement.

7. Procédé de test d'une automobile pour tester des fonctionnalités reposant sur une caméra, les fonctionnalités reposant sur une caméra étant :
- une régulation de vitesse variable,
- des systèmes prévenant une collision et
- une détection de passant,
comprenant les stades de :
- acquisition de données d'entrée de capteur, et
- traitement des données d'entrée de capteur,
dans lequel le stade d'acquisition de données d'entrée de capteur comprenant capter des données de capteur, en utilisant une unité de capteur ayant un système de capteur et un système électronique, et dans lequel le stade d'acquisition de données d'entrée de capteur est **caractérisé par**
la transmission de données de capteur synthétiques d'un générateur de données de capteur synthétiques au système électronique de l'unité de capteur, le capteur étant une caméra,
dans lequel l'unité de capteur est une unité de caméra, dans lequel le système de capteur est un système optique, et dans lequel les données de capteur sont des données d'image.

8. Procédé de test d'une automobile suivant la revendication 7,
comprenant le stade de production des données de capteur synthétiques à transmettre au système électronique de l'unité de capteur.

9. Procédé de test d'une automobile suivant la revendication 7 ou 8,
dans lequel le stade de transmission de données de capteur synthétiques au système électronique de l'unité de capteur comprend contourner le système de capteur de l'unité de capteur.

10. Procédé de test d'une automobile suivant la revendication 7, 8 ou 9,
comprenant, en outre, un stade de transmission de requêtes d'améliorations de capteur et/ou d'instructions d'améliorations de capteur au générateur de données de capteur synthétiques.

11. Procédé de test d'une automobile suivant la revendication 10,
dans lequel les requêtes d'améliorations de capteur et/ou les instructions d'améliorations de capteur sont incluses pour produire des données de capteur synthétiques.

12. Procédé de test d'une automobile suivant l'une quelconque des revendications 7 à 11 précédentes,
comprenant, en outre, le stade de désactivation d'un système de capteur de l'unité de caméra.

13. Produit de programme d'ordinateur pour le test dans une automobile de fonctionnalité reposant sur une caméra, les fonctionnalités reposant sur une caméra étant :
- une régulation de vitesse variable,
- des systèmes prévenant une collision et
- une détection de passant,
le produit de programme d'ordinateur comprenant un code déchiffrable par ordinateur pour faire qu'un processeur effectue les stades de :
- acquisition de données d'entrée de capteur, et
- traitement des données d'entrée de capteur,
dans lequel le stade d'acquisition de données d'entrée de capteur comprenant capter des données de capteur, en utilisant une unité de capteur ayant un système de capteur et un système électronique, et dans lequel le stade d'acquisition de données d'entrée de capteur est **caractérisé par** la transmission de données de capteur synthétiques d'un générateur de données de capteur synthétiques au système électronique de l'unité de capteur,
le capteur étant une caméra,
dans lequel l'unité de capteur est une unité de caméra, dans lequel le système de capteur est un système optique, et dans lequel les données de capteur sont des données d'image.
